# EUROPEAN PATENT APPLICATION

(11) **EP 0 541 125 A2**
(43) Date of publication of application: **12.05.1993**
(21) Application number: 92119090.6
(22) Date of filing: 06.11.1992
(51) Int. Cl.: G01N 15/02

(54) **Apparatus and methods for measuring particle size and density in exhaust stacks**

(30) Priority: 07.11.1991 US 789226
(71) Applicant: Hughes Aircraft Company, Los Angeles, California 90045-0066 (US)
(72) Inventor: Thomas, L. Carl, Mission Viejo, California 92691 (US)
(74) Representative: Witte, Alexander, Dr.-Ing.

(57) **Abstract**

A system (10) for measuring the size and total mass of particles expelled from an exhaust stack comprises a particle size monitoring probe (11) disposed in the exhaust stack that is adapted to detect and count particles having sizes within a predetermined size range and provide data indicative thereof. Further provided is a computer (12) coupled to the probe (11) and a computer program (13) adapted to run on the computer (12) that is further adapted to compute the total mass of particles expelled from an exhaust stack derived from the data provided by the probe (11) and output the particle size, total quantity and total mass of the particles monitored in the exhaust stack. Further disclosed is a method for measuring the size and mass of particles emanating from an exhaust stack.

## Description

### BACKGROUND

The present invention relates generally to particle size measuring systems and methods, and more particularly, to systems and method for noncontact measurement of the particle size and total mass of water-based paint and other materials that are expelled from an exhaust stack.

One company, Adam Opel AG in Germany, has converted its painting systems from the use of oil-based paint to water-based paint. This plant was the first to convert to water based paints. The particulate problem appeared when this conversion was made. In order to measure the particle size and density of paint particles that are expelled from the painting system, the conventional method that was used was to insert a square piece of white filter paper having a size of 30 centimeters by 30 centimeters into the air stream within an exhaust, leave it for a week, remove it, and manually count the particles using a magnifying glass. The disadvantages of this technique are that not all particles are captured, the particles tend to flow around the filter due to the air flow, manual counting is time consuming, only the larger particles are counted, and no measurement of total particulate mass is possible. Furthermore, any paint operation that converts to water based paints may have the same particle emission problem.

Thus it would be an improvement in the art to have a system and method that is capable of monitoring the exhaust gases of a water-based painting system to determine the size and density of the paint particles expelled through its exhaust.

### SUMMARY OF THE INVENTION

In order to meet the above improvement, the present invention provides for a system and method for monitoring and determining the size and mass of particulates contained in exhaust gasses. The system comprises a particle size monitoring probe disposed in the exhaust stack that is adapted to detect and count particles having sizes within a predetermined size range and provide data indicative thereof. A computer is coupled to the probe. A computer program runs on the computer that is adapted to compute the total mass of the particles expelled from an exhaust stack derived from the data provided by the probe and output the particle size, total quantity and total mass of the particles monitored in the exhaust stack.

One method of measuring the size and mass of particles emanating from an exhaust stack in accordance with the present comprises the following steps. (1) Disposing a particle size monitoring probe in the exhaust stack that is adapted to detect and count particles having sizes within a predetermined size range and provide data indicative thereof. (2) Monitoring the exhaust particles emanating from the exhaust stack with the probe. (3) Providing a computer that is coupled to the probe and that is adapted to process data provided thereby. (4) Running a computer program on the computer that is adapted to compute the total mass of the particles expelled from an exhaust stack derived from the data provided by the probe. (5) Outputting the particle size, total quantity and total mass of the particles monitored in the exhaust stack.

The present system and method measures particulates in the size range from (a) 50 microns to 3100 microns, (b) 100 microns to 6200 microns, or (c) 150 microns to 9300 microns, records the data on magnetic media (a storage device), and postprocesses the data to calculate the mass of the particulates discharged through the exhaust stack. The particulates measured by the system may be water particles, wet paint particles, or solid particles. The system and method utilizes a probe and computer system to achieve its objectives.

The present system and method measures the size of, and counts, every particle that passes through its measurement aperture within one of the above-defined size ranges. The present system and method measures the particles using a noncontact method, and therefore is able to measure wet paint particles. The present system and method is adapted to determine whether or not particulates are being discharged in an exhaust stack, when they are being discharged, what size and quantity are being discharged, and the total mass of particulates discharged during some time interval.

### BRIEF DESCRIPTION OF THE DRAWINGS

The various features and advantages of the present invention may be more readily understood with reference to the following detailed description taken in conjunction with the accompanying drawings, wherein like reference numerals designate like structural elements, and in which:
Fig. 1 shows a paint particle monitoring system that comprises a system for monitoring and determining the size and mass of particulates contained in exhaust gasses expelled from an exhaust stack in accordance with the principles of the present invention;
Figs. 2a and 2b show cross sectional and top views of the interior of an exhaust stack illustrating the location of a probe employed in the present system; and
Figs. 3a and 3b show a flow diagram illustrating one method of determining the size and mass of particulates contained in exhaust gasses expelled from an exhaust stack in accordance with the principles of the present invention.

### DETAILED DESCRIPTION

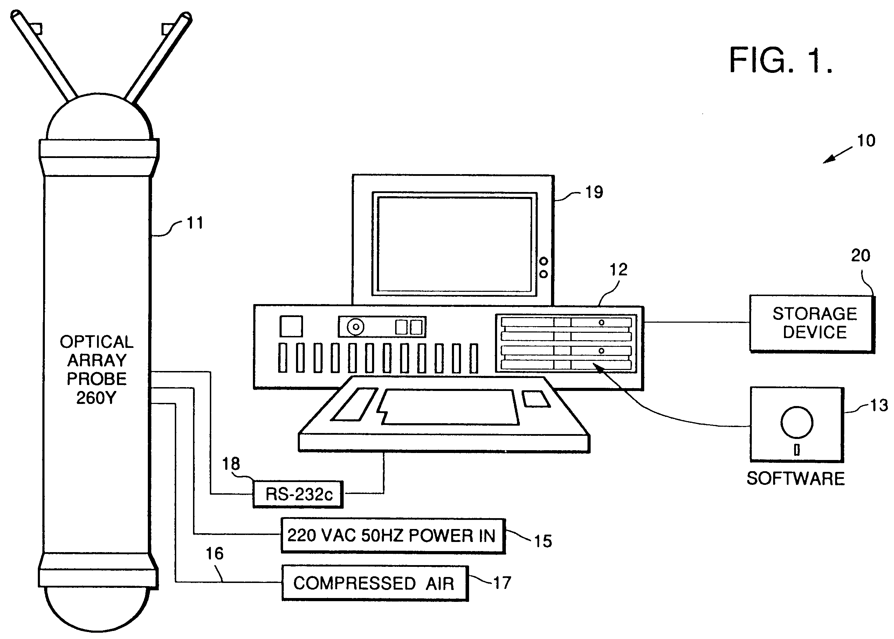

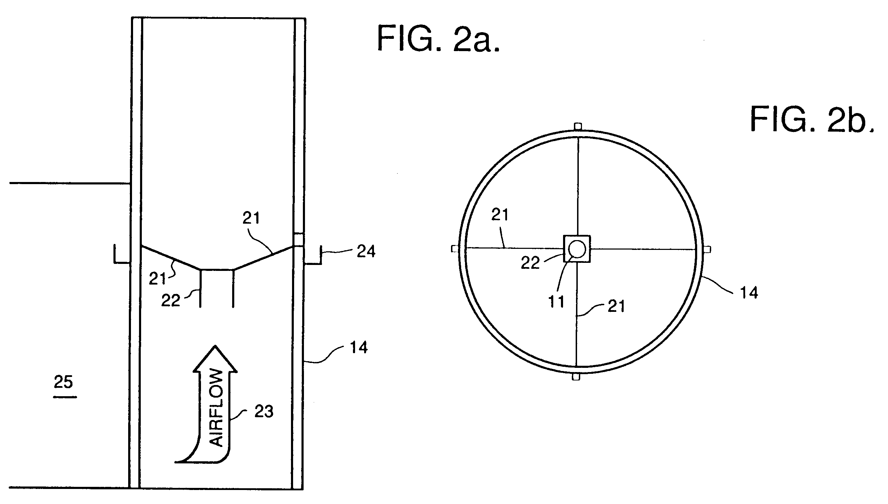

Referring to the drawing figures, Fig. 1 shows a paint particle monitoring system 10 in accordance with the principles of the present invention. The paint particle monitoring system 10 employs a probe 11 coupled to a computer 12 and a software program 13 (represented by a floppy disk) running on the computer 12. The probe 11 is adapted to monitor a paint exhaust stack 14 (Fig. 2) and determine the size of particulates contained in exhaust gasses expelled from from the stack 14. The computer 12 and software 13 are adapted to monitor the output of the probe 11 and determine the mass of particulates contained in exhaust gasses expelled from from the stack 14 and otherwise display or print the data and results of the computations. The computer 12 may be a conventional personal computer, such as an IBM personal computer, for example.

The probe 11 may be comprised of a precipitation probe manufactured by Particle Measuring Systems, Inc. in Boulder, Colorado, for example. The probe 11 comprises a canister or housing that is powered by a 220 volt, 50 Hz power source 15. The probe 11 is also fed by compressed air provided by a compressed air line 16 and compressed air source 17. The computer 12 is coupled to the probe 11 by means of an RS-232C interface 18.

Figs. 2a and 2b show cross sectional and top views of the interior of an exhaust stack 14 illustrating the location of the probe 11 employed in the paint particle monitoring system 10 shown in Fig. 1. The exhaust stack 14 is typically a relatively large structure and the probe 11 is suspended in the interior of the exhaust stack 14 by means of a plurality of guy wires 21 that suspend the probe 11 in the center of the stack 14. The guy wires 21 are secured to the exterior wall of the stack 14 in a conventional manner. A walkway 24 disposed around the periphery of the stack 14 is provided to assist in suspending the probe 11 at an appropriate height (typically the height is selected to be at about three times the diameter of the stack 14) above the floor of the stack 14. However, the only constraint is that the probe be accessible by operating personnel. The probe 11 is held in a vertical position by means of a cage 22 that is suspended by the guy wires 21 However, it is to be understood that the manner in which the probe is suspended in the stack 14 may be any conventional manner or means that is available to the user. Paint exhaust gasses, illustrated by the arrow 23, are expelled from a painting system 25 and flow from the lower portion of the exhaust stack 14 past the location of the suspended probe 11 and out of the top of the stack 14.

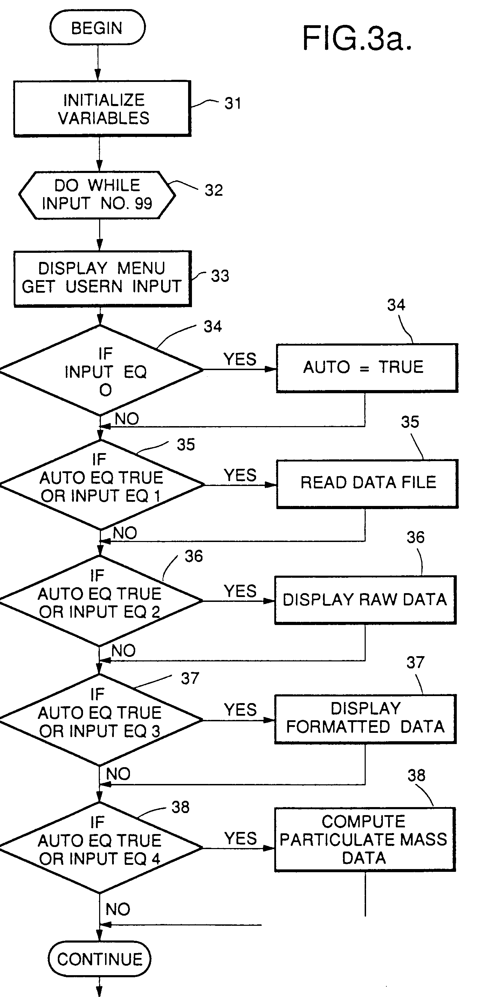

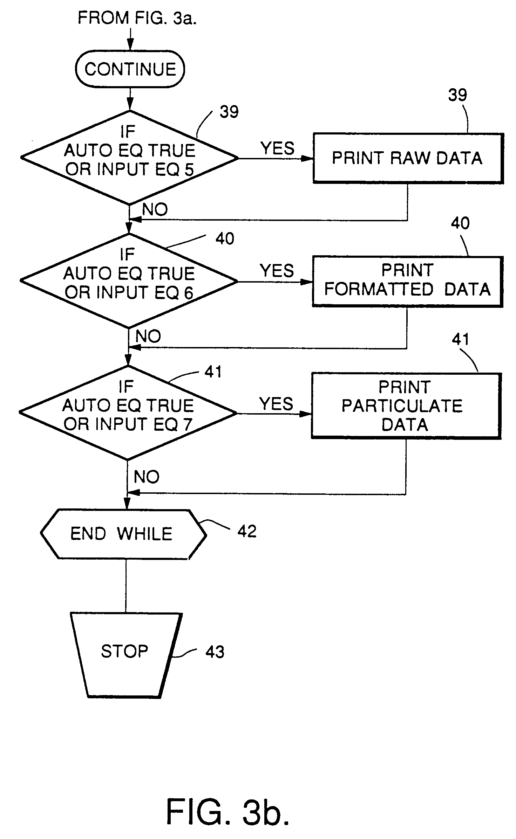

In operation, the probe 11 utilizes a laser that illuminates a linear photodiode array. Electronics that are a part of the probe 11 are used to count the number of shadowed photodiode elements created by paint particles passing through a collimated light beam provided by the laser. The number of shadowed elements and the optical spacing of the elements is used to determine particle width. The probe 11 sends size and count data to the computer 12 for storage and further processing. After the data is collected, it is processed by the software program 13 to compute total mass. The description of the software program 13 is presented below with reference to Figs. 3a and 3b.

Figs. 3a and 3b show a flow diagram illustrating one method 30 in accordance with the principles of the present invention. The present method 30 provides a means of determining the size and mass of particulates contained in the exhaust gasses expelled from the exhaust stack 14. This method is implemented in the form of the software program 13 that runs on the computer 12. Presented below is the methodology of the software expressed in terms of program design language (PDL) which is conventionally used to describe the operation of the code of the software program 13.

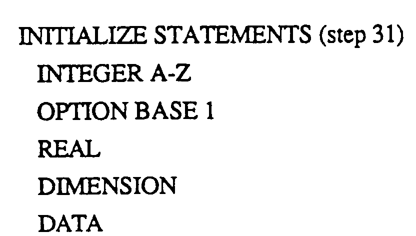

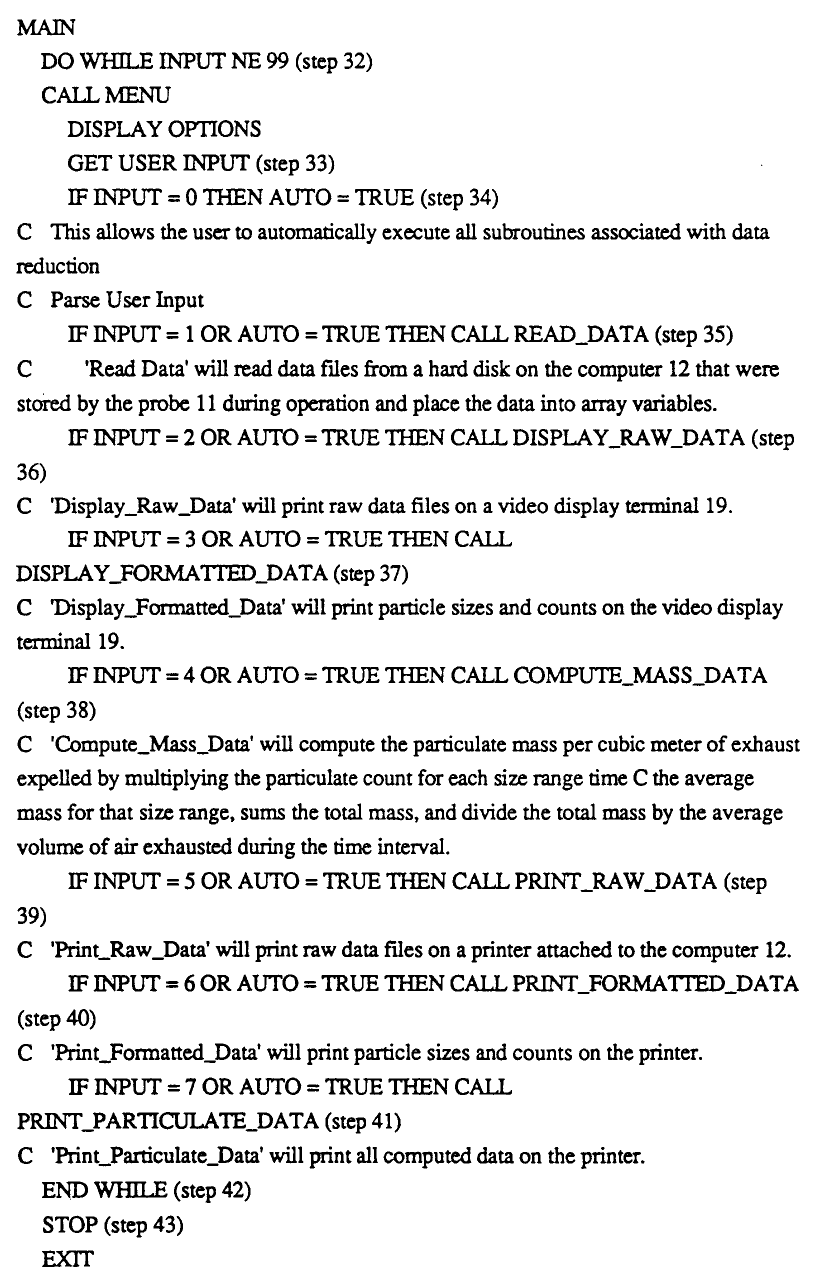

In view of the above-described program design language description of the software program 13, one method 30 measuring the size and mass of particles emanating from the exhaust stack 14 in accordance with the present comprises the following steps. (1) Disposing a particle size monitoring probe 11 in the exhaust stack 14 that is adapted to detect and count particles having sizes within a predetermined size range and provide data indicative thereof. (2) Monitoring the exhaust particles emanating from the exhaust stack 14 with the probe 11. (3) Providing a computer 12 that is coupled to the probe 11 and that is adapted to process data provided thereby. (4) Running a computer program 13 on the computer 12 that is adapted to compute the total mass of the particles expelled from an exhaust stack derived from the data provided by the probe 11. (5) Outputting the particle size, total quantity, and total mass of the particles monitored in the exhaust stack 14.

The computational method of determining the number, size and mass of particles emanating from the exhaust stack 14 according to the present invention comprises the following steps. (1) Storing data obtained from the probe 11 in data files on a storage device 20 coupled to the computer 12. (2) Reading data files from the storage device 20 that were stored by the probe 11 during operation and placing the data into array variables. (3) Computing the particulate mass per cubic meter of exhaust expelled from the stack 14 by (a) multiplying the particulate count for each of a predetermined plurality of size ranges time the average mass for that size range, (b) summing the plurality of computed values to arrive at the total mass, and (c) dividing the total mass by the average volume of air exhausted from the exhaust stack 14 during a predetermined time interval.

The present system and method measures particulates in the size range from (a) 50 microns to 3100 microns, (b) 100 microns to 6200 microns, or (c) 150 microns to 9300 microns, records the data on magnetic media, and postprocesses the data to calculate the mass of the particulates discharged through the exhaust stack. The particulates measured by the system may be water particles, wet paint particles, or solid particles. The system and method utilizes a probe and computer system to achieve its objectives.

The present system and method measures the size of, and counts, every particle that passes through its measurement aperture within the size range of 50-6200 microns or 100-6200 microns. The present system and method measures the particles using a noncontact method, and therefore is able to measure wet paint particles. The present system and method is adapted to determine whether or not particulates are being discharged in an exhaust stack, when they are being discharged, what size and quantity are being discharged, and the total mass of particulates discharged during some time interval.

Thus there has been described a new and improved system and method for non-contact measurement of the particle size and total mass of water-based paint and other materials that are expelled from an exhaust stack. It is to be understood that the above-described embodiments are merely illustrative of some of the many specific embodiments which represent applications of the principles of the present invention. Clearly, numerous and other arrangements can be readily devised by those skilled in the art without departing from the scope of the invention.

## Claims

1. A system (10) for measuring the size and total mass of particles expelled from an exhaust stack (14), said system (10) comprising:
a particle size monitoring probe (11) disposed in the exhaust stack (14) that is adapted to detect and count particles having sizes within a predetermined size range and provide data indicative thereof;
a computer (12) coupled to the probe (11);
a computer program (13) adapted to run on the computer (12) that is adapted to compute the total mass of the particles expelled from an exhaust stack (14) derived from the data provided by the probe (11) and output the particle size, total quantity and total mass of the particles monitored in the exhaust stack (14).

2. The system of Claim 1 which further comprises an RS-232C interface (18) disposed between the computer (12) and the probe (11) that is adapted to provide a data and control interface therebetween.

3. The system of Claim 1 or Claim 2 wherein the probe (11) is suspended in the interior of the exhaust stack (14) by means of guy wires (21).

4. The system of any of Claims 1-3 wherein the probe (11) is supported by means of a cage (22) in the interior of the exhaust stack (14).

5. The system of any of Claims 1-4 wherein the particles monitored by the system (10) comprise water particles, and/or wet paint particles and/or solid particles.

6. Use of a particle size monitoring probe (11) that is adapted to detect and count particles having sizes within a predetermined size range and to provide data indicative thereof, characterized in that said particle size monitoring probe (11) is used in a system (10) for measuring the size and total mass of particles expelled from an exhaust stack (14).

7. The use of the particle size monitoring probe (11) according to Claim 6, characterized in that said particle size monitoring probe (11) is used in a system (10) according to any of Claims 1-5.

8. The system of any of Claims 1-7 wherein the particles monitored by the system (10) are in the size range of 50-6.200 microns or 100-6.200 microns.

9. A method of measuring the size and mass of particles emanating from an exhaust stack (14), said method comprising the steps of:
disposing a particle size monitoring probe (11) in the exhaust stack (14) that is adapted to detect and count particles having sizes within a predetermined size range and provide data indicative thereof;
monitoring the exhaust particles emanating from the exhaust stack (14) with the probe (11);
providing a computer (12) that is coupled to the probe (11) and that is adapted to process data provided thereby;
running a computer program (13) on the computer (12) that is adapted to compute the total mass of the particles expelled from an exhaust stack (14) derived from the data provided by the probe (11); and
outputting the particle size, total quantity, and total mass of the particles monitored in the exhaust stack (14).

10. The method of Claim 9 wherein the step of running a computer program (13) on the computer (12) comprises processing data by means of a computational method that determines the number, size and mass of particles emanating from the exhaust stack (14) and which comprises the steps of:
storing data obtained from the probe (11) in data files on a storage device (20) coupled to the computer (12);
reading data files from the storage device (20) that were stored by the probe (11) during operation and placing the data into array variables; and
computing the particulate mass per cubic meter of exhaust expelled from the exhaust stack (14) by:
multiplying the particulate count for each of a predetermined plurality of size ranges time the average mass for that size range;
summing the plurality of computed values to arrive at the total mass; and
dividing the total mass by the average volume of air exhausted from the exhaust stack (14) during a predetermined time interval.
